# EUROPEAN PATENT SPECIFICATION

(11) **EP 4 169 776 B1**
(45) Date of publication and mention of the grant of the patent: **09.07.2025**
(21) Application number: 21825987.7
(22) Date of filing: 20.05.2021
(51) Int. Cl.: B60R 21/235, B60R 21/205, B60R 21/2346

(54) **FRONT PASSENGER SEAT AIRBAG DEVICE, AND METHOD FOR MANUFACTURING FRONT PASSENGER SEAT AIRBAG DEVICE**
AIRBAGVORRICHTUNG FÜR EINEN VORDEREN PASSAGIERSITZ UND VERFAHREN ZUR HERSTELLUNG EINER AIRBAGVORRICHTUNG FÜR EINEN VORDEREN PASSAGIERSITZ
DISPOSITIF DE COUSSIN DE SÉCURITÉ GONFLABLE DE SIÈGE DE PASSAGER AVANT, ET PROCÉDÉ DE FABRICATION DE DISPOSITIF DE COUSSIN DE SÉCURITÉ GONFLABLE DE SIÈGE DE PASSAGER AVANT

(30) Priority: 17.06.2020 JP 2020104627
(43) Date of publication of application: 26.04.2023
(73) Proprietor: Autoliv Development AB, 44783 Vargarda (SE)
(72) Inventor: YUINO, Hidekazu, Yokohama-shi, Kanagawa 222-8580 (JP); TACHIWANA, Ryunosuke, Yokohama-shi, Kanagawa 222-8580 (JP)
(74) Representative: Mewburn Ellis LLP
(86) International application number: PCT/JP2021/019227
(87) International publication number: WO 2021/256160

(56) References cited:
- JP-A- 2015 016 840
- JP-A- 2015 157 603
- JP-A- 2017 056 910
- JP-A- 2020 050 181
- US-A1- 2005 082 807

## Description

### TECHNICAL FIELD

The present invention relates to: a front passenger seat airbag device having an airbag cushion that expands and deploys between an instrument panel of a vehicle and an occupant on a front passenger seat; and a method of manufacturing a front passenger seat airbag device.

### BACKGROUND TECHNOLOGY

Airbag devices have generally become standard equipment in vehicles in recent years. An airbag device is a safety device which is operated in the event of an emergency such as a vehicle collision, retaining and protecting passengers utilizing an airbag cushion which expands and deploys based on gas pressure. There are various types of airbag devices depending on the installation site and application. For example, in a driver's seat, a front airbag is provided in the center of a steering wheel. Furthermore, in a front passenger seat, a passenger airbag is provided on an instrument panel or a peripheral area thereof.

The shape of the airbag cushion of various airbag devices is devised in accordance with surrounding structures and the like so as to efficiently restrain an occupant. For example, an airbag 1 described in Patent Document 1 is for a front passenger seat, and is configured such that a forward expanding part 11 contacts and presses against an instrument panel I and a windshield W so as to stand on its own above the instrument panel I.

### PRIOR ART DOCUMENTS

### PATENT DOCUMENTS

Patent Document 1: Japanese Unexamined Patent Application 2012-144201 Patent Document 2: JP 2015 157603

Document 2 discloses a front passenger seat airbag with two side panels, which are connected by three central panels. These panels are connected together sequentially, so that the three panels create a loop.

### SUMMARY OF THE INVENTION

Cited Document 1 states that a foremost end portion B of a bottom portion 11a of the forward expanding part 11 may be arc-shaped (see paragraph 0036). However, depending on the degree of the arc shape of the foremost end portion B, it may affect the retention of the self-supporting posture of the airbag 1. For example, if the radius of curvature of the arc shape of the foremost end portion B is large, a front surface portion 11b also protrudes greatly toward the windshield W, causing the front surface portion 11b to strongly interfere with the windshield W. In such a case, for example, the forward expanding part 11 may interfere with the windshield W and bounce up, the bottom portion 11a may rise off the instrument panel I, making it difficult for the airbag 1 to obtain a reaction force from the instrument panel I, or the front surface portion 11b may have a trough-like depression, making it difficult to absorb a load from the occupant.

### PROBLEM TO BE SOLVED BY THE INVENTION

In view of the foregoing, an objective of the present invention is to provide a front passenger seat airbag device capable of efficiently restraining an occupant while maintaining a self-supporting posture on an instrument panel and a method of manufacturing a front passenger seat airbag device.

### MEANS FOR SOLVING THE PROBLEMS

In order to solve the problem above, a typical configuration of a front passenger seat airbag device according to the present invention includes:
an airbag cushion that expands and deploys above an instrument panel of a vehicle and between the instrument panel and a front passenger seat in a condition contacting an upper surface of the instrument panel; and
an inflator that supplies gas to the airbag cushion, the inflator being secured to an inner side of the instrument panel; wherein
the airbag cushion includes:
   a pair of side panels that form side portions on two sides of the airbag cushion in a vehicle width direction, and
   a strip-shaped main panel connecting edges of the pair of side panels to each other;
   the pair of side panels have an acute angle portion that extends along the upper surface of the instrument panel toward the front of the vehicle at an acute angle; and
   the airbag cushion further includes:
      an inner seam margin in which an edge of the main panel and edges of the pair of side panels are joined in a condition bent to the inner side of the airbag cushion, and
      an outer seam margin in which end portions on two sides of the main panel in a longitudinal direction are vertically overlapped and joined in a state further extending to the front of the vehicle from the acute angle portion of the pair of side panels.

With the configuration above, the airbag cushion contacts the upper surface of the instrument panel through the strip-shaped main panel. In particular, in the front side expanding part of the airbag cushion formed by the acute angle portion of the side panel, the outer seam margin of the main panel is formed to extend further forward from the front end, such that the front end is less likely to become rounded. By efficiently forming the tapered front side expanding part in the airbag cushion in this manner, the airbag cushion can be suitably inserted between the instrument panel and the windshield in contact with the instrument panel, and thus the self-supporting posture of the airbag cushion can be maintained.

The airbag cushion may have a front side expanding part that includes the acute angle portions of the pair of side panels and expands so as to protrude to the front of the vehicle in a wedge shape along the upper surface of the instrument panel, and the outer seam margin may be in a condition extending from a front end of the front side expanding part. With the wedge-shaped front side expanding part, the front end is formed as an outer seam margin, and thus is less likely to become rounded, can suitably fit between the instrument panel and the windshield, and can contact the instrument panel with a flat surface, such that the self-supporting posture of the airbag cushion can be maintained.

The main panel may have a through hole formed at a location contacting the upper surface of the instrument panel and connected to the inflator in a condition in which a portion of the inflator is inserted. By connecting the through hole of the main panel to the inflator secured inside the instrument panel, the airbag cushion can be efficiently established on the upper surface of the instrument panel.

The airbag cushion further may have a diffuser provided in a periphery of the through hole of the main panel on the inner side of the airbag cushion to cover the inflator and guide gas in a prescribed direction. By providing the diffuser, it becomes possible to efficiently expand and deploy the airbag cushion.

Upper edges of the pair of side panels may extend in a shape that approximates a straight line. This configuration suppresses the airbag cushion from expanding in an excessively convex manner toward the windshield when expanded and deployed, and allows the front side expanding part of the airbag cushion to be smoothly inserted between the windshield and the instrument panel.

The upper edges of the pair of side panels may be curved downward and recessed. This configuration also suppresses the airbag cushion from expanding in an excessively convex manner toward the windshield when expanded and deployed, and allows the front side expanding part of the airbag cushion to be smoothly inserted between the windshield and the instrument panel.

The pair of side panels further may have: a front side region including the acute angle portion and positioned above the instrument panel; a restraining region positioned between the instrument panel and the occupant and extending below the front side region; and a recessed portion formed on a boundary between the front side region and the restraining region of the lower edges of the pair of side panels and curved upward and indented.

With the configuration above, when an occupant comes into contact with the airbag cushion, the airbag cushion bends at an angle corresponding to an approaching direction of the occupant starting from the recessed portion of the side panel, such that the occupant can be more appropriately restrained.

A typical configuration of a method of manufacturing a front passenger seat airbag device according to the present invention is a method of manufacturing a front passenger seat airbag device as defined by claim 1 the method including: a step of manufacturing a pair of side panels having an acute angle portion that extends along the upper surface of the instrument panel toward the front of the vehicle at an acute angle; a step of connecting edges of the pair of side panels together by a strip-shaped main panel to achieve a condition in which end portions on two sides of the main panel in a longitudinal direction further extend to the front of the vehicle to vertically overlap; a step of inverting the airbag cushion from an opening between the end portions of the main panel; and a step of joining the end portions of the main panel.

A front passenger seat airbag device having the functions and effects described above can be manufactured by the manufacturing method. In other words, the manufacturing method can manufacture a front passenger seat airbag device having an airbag cushion capable of efficiently restraining an occupant while favorably maintaining a self-supporting posture.

### EFFECT OF THE INVENTION

The present invention can provide: a front passenger seat airbag device capable of efficiently restraining an occupant while maintaining a self-supporting posture on an instrument panel; and a method of manufacturing a front passenger seat airbag device.

### BRIEF DESCRIPTION OF THE DRAWINGS

FIG. 1 is diagrams illustrating the outlines of a front passenger seat airbag device according to an Embodiment of the present invention.
FIG. 2 is a schematic cross-sectional view along A-A of an airbag cushion of FIG. 1(b).
FIG. 3 is diagrams illustrating the outlines of the airbag cushion in FIG. 2.
FIG. 4 is enlarged views of a front side expanding part of the airbag cushion in FIG. 3(a).
FIG. 5 is cross-sectional views of the front side expanding part in FIG. 4(b).
FIG. 6 is a modified example of a side panel in FIG. 3(b).

### MODE FOR CARRYING OUT THE INVENTION

Preferred Embodiments according to the present invention will hereinafter be described in detail with reference to the attached drawings. Dimensions, materials, other specific numerical values, and the like indicated in the Embodiments are merely examples for ease of understanding of the invention and do not limit the present invention unless otherwise noted. Note that in the present specification and drawings, elements having essentially identical functions and configurations are labeled with identical symbols in order to omit redundant descriptions along with an illustration of elements not directly related to the present invention.

### Front Passenger Seat Airbag Device

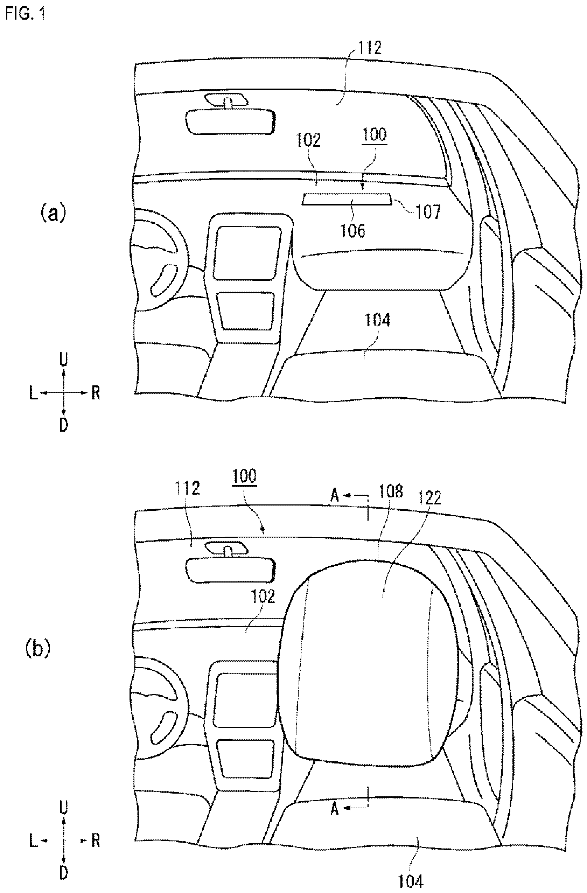

FIG. 1 is diagrams illustrating the outlines of a front passenger seat airbag device 100 according to an embodiment of the present invention. FIG. 1(a) is a diagram illustrating a vehicle before activation of the front passenger seat airbag device 100. Hereinafter, regarding FIG. 1(a) and other diagrams, a vehicle front-to-back direction is illustrated by the symbols F (Front) and B (Back), a vehicle width direction of the vehicle by the symbols L (Left) and R (Right), and a vehicle up-down direction by the symbols U (Up) and D (Down).

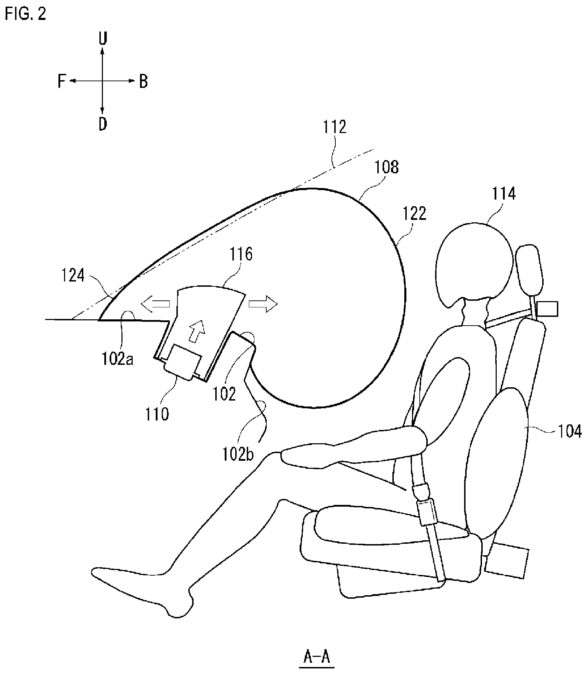

In the present Embodiment, the front passenger seat airbag device 100 is implemented as a passenger bag for a passenger seat (seat 104 on the right in the front row) in a vehicle with the steering wheel on the left side. Hereinafter, in order to provide descriptions assuming the seat 104 is on the right in the front row, for example, the outside of the vehicle in the width direction of the vehicle means the right side of the vehicle, while the inside of the vehicle in the width direction of the vehicle means the left side of the vehicle. Furthermore, "upward" refers to a head direction as viewed from an occupant 114 (see FIG. 2) normally seated on the seat 104, and "downward" refers to a lower limb direction as viewed from the occupant 114.

An airbag cushion 108 (see FIG. 1(b)) of the front passenger seat airbag device 100 is stowed in a stowing part 106 provided in an instrument panel 102 of the vehicle. The stowing part 106 is installed in the front of the vehicle seat 104 and stows an inflator 110 (see FIG. 2), which is a gas generating device, in addition to the airbag cushion 108.

FIG. 1(b) is a diagram illustrating the vehicle after activation of the front passenger seat airbag device 100 in FIG. 1(a). The airbag cushion 108 has a bag shape and is formed by overlaying and sewing or adhering a plurality of base fabrics forming a surface thereof.

FIG. 2 is a schematic cross-sectional view along A-A of the airbag cushion 108 of FIG. 1(b). As illustrated in FIG. 2, the airbag cushion 108 expands and deploys above the instrument panel 102 and between the instrument panel 102 and the occupant 114 of the seat 104 to restrain the occupant 114 from the front of the vehicle, while being in contact with the upper surface of the instrument panel 102.

A part of the inflator 110, which is a gas generating device, is inserted inside the airbag cushion 108. The inflator 110 is secured to the inside of the instrument panel 102 using a stud bolt (not illustrated), and is actuated by an impact detection signal sent from a prescribed sensor to supply gas to the airbag cushion 108. The airbag cushion 108 begins to expand by means of the gas from the inflator 110, cleaves a cover 107 (see FIG. 1(a)), and expands and deploys toward the seat 104 based on the expansion pressure.

The inflator 110, in the present Embodiment, is a disk type. Examples of currently prevailing inflators include: types which are filled with a gas generating agent and burn the agent to generate gas; types which are filled with compressed gas and supply gas without generating heat; hybrid types which utilize both combustion gas and compressed gas; and the like. Any of these types can be used for the inflator 110.

The diffuser 116 is a member that rectifies gas from the inflator 110 and is provided inside the airbag cushion 108 so as to cover the inflator 110. The diffuser 116 is provided with an opening for gas flow at a prescribed location. Providing the diffuser 116 enables expansion and deployment of the airbag cushion 108 to be performed in an efficient manner.

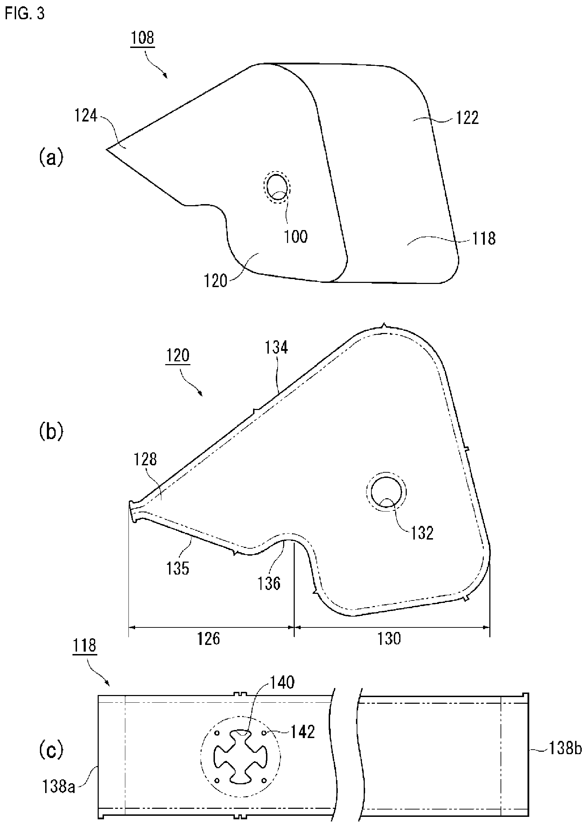

FIG. 3 is a diagram illustrating an outline of the airbag cushion 108 in FIG. 2. FIG. 3(a) is a perspective view of the airbag cushion 108 when expanded and deployed in FIG. 2. The airbag cushion 108 constitutes a central main panel 118 and a pair of left and right side panels 120. The vehicle rear side of the airbag cushion 108 forms an occupant restraining part 122 having a large vertical dimension.

A front side expanding part 124 of the airbag cushion 108 on the front side of the vehicle expands along an upper surface 102a of the instrument panel 102 (see FIG. 2) so as to protrude in a wedge shape to the front of the vehicle. The front side expanding part 124 enters a space between the instrument panel 102 and a windshield 112, makes contact with the upper surface 102a of the instrument panel 102, and maintains the airbag cushion 108 in a self-supporting posture.

FIG. 3(b) is a diagram illustrating the side panel 120 in FIG. 3(a). A pair of the side panels 120 are provided on the airbag cushion 108 (see FIG. 3(a)), in a symmetrical shape in the vehicle width direction (left-right) and form side portions on two sides of the airbag cushion 108 in the vehicle width direction.

A front side region 126 of the side panels 120 is a region positioned above the instrument panel 102 (see FIG. 2). The vehicle front side of the front side region 126 forms an acute angle portion 128 that forms a side portion of the wedge-shaped front side expanding part 124 in the vehicle width direction. The acute angle portion 128 extends along the upper surface 102a of the instrument panel 102 toward the front of the vehicle at an acute angle.

A restraining region 130 of the side panels 120 is a portion that forms the occupant restraining part 122 of the airbag cushion 108 (see FIG. 2), is positioned between the instrument panel 102 and the occupant 114, and is positioned below the front side region 126. The restraining region 130 is provided with a vent hole 132 for discharging gas from an interior of the airbag cushion 108.

An upper edge 134 of the side panel 120 that extends continuously from the front side region 126 and the restraining region 130 extends obliquely in a shape that approximates a straight line. The shape of the upper edge 134 of the side panel 120 that approximates a straight line prevents the airbag cushion 108 (see FIG. 2) from expanding in an excessively convex manner toward the windshield 112 when expanded and deployed. This configuration enables the front side expanding part 124 to be smoothly inserted into the space between the windshield 112 and the instrument panel 102.

A recessed portion 136 of a lower edge 135 of the side panel 120 is formed at a boundary between the front side region 126 and the restraining region 130. The recessed portion 136 has a concave shape that curves upward. The recessed portion 136 is a portion positioned near a corner between the upper surface 102a and a design surface 102b of the instrument panel 102 (see FIG. 2) when the airbag cushion 108 is expanded and deployed. By providing the recessed portion 136, when the occupant 114 contacts the airbag cushion 108, the occupant restraining part 122 of the airbag cushion 108 can bend at an angle corresponding to the approaching direction of the occupant 114 to absorb the load, thereby more appropriately restraining the occupant 114.

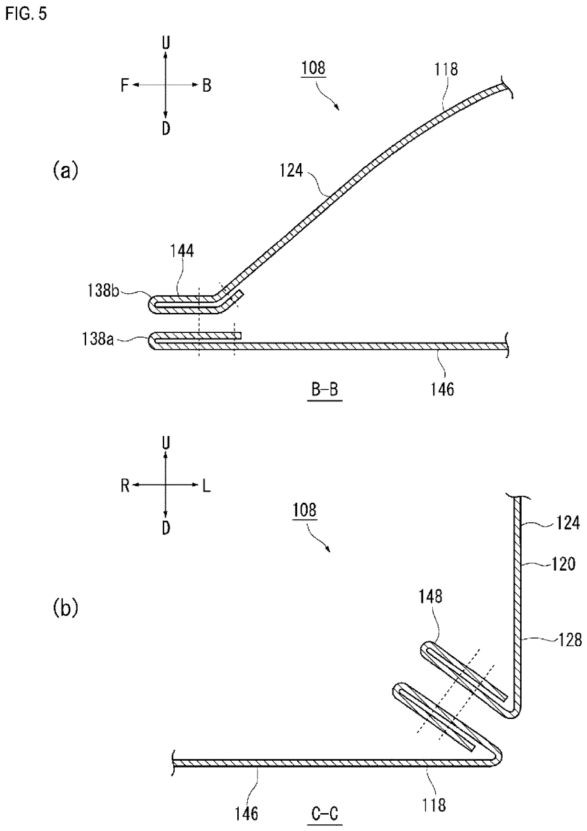

FIG. 3(c) is a diagram illustrating the main panel 118 in FIG. 3(a). The main panel 118 has an elongated strip shape, and the edges of the pair of side panels 120 (see FIG. 3(b)) are connected to each other by sewing or the like. The end portions 138a, 138b on two sides of the main panel 118 in the longitudinal direction gradually approach the front of the vehicle along the upper edge 134 and lower edge 135 of the side panels 120, and then are joined by sewing or the like to each other at a position extending from a tip end of the acute angle portion 128 of the side panel 120 to form an outer seam margin 144 (see FIG. 5(a)).

The main panel 118 is provided with a through hole 140 connected to the inflator 110 (see FIG. 2). The through hole 140 is formed at a location on the main panel 118 that contacts the upper surface 102a of the instrument panel 102. A bolt hole 142 into which a stud bolt of the inflator 110 is inserted is also provided in the area of the through hole 140. A part of the inflator 110 is inserted into the through hole 140 using the bolt hole 142 or the like and the through hole 140 is connected to the inflator 110.

By securing the through hole 140 of the main panel 118 together with the inflator 110 (see FIG. 2) to the inside of the instrument panel 102, the airbag cushion 108 can be efficiently established on the upper surface 102a of the instrument panel 102. Note that the diffuser 116 described above is also provided around the through hole 140 of the main panel 118 inside the airbag cushion 108 by sewing or the like.

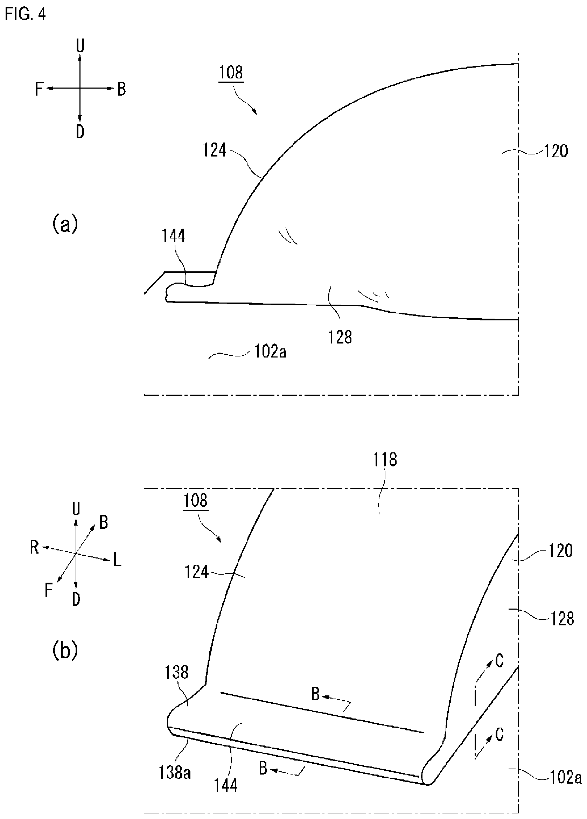

FIG. 4 is enlarged views of the front side expanding part 124 of the airbag cushion 108 in FIG. 3(a). FIG. 4(a) illustrates the front side expanding part 124 in FIG. 3(a) from the left side in the vehicle width direction. The outer seam margin 144 is formed at the front end of the front side expanding part 124. The outer seam margin 144 is a portion where the end portions 138a, 138b (see FIG. 5(a)) of the main panel 118 are joined vertically by sewing or the like. In a conventional airbag cushion, the seam margin is formed on the inner side, but the front side expanding part 124 of the airbag cushion 108 is intentionally formed with the outer seam margin 144 positioned on the outer side, such that the front end of the front side expanding part 124 can be expanded and deployed at a more acute angle without becoming rounded.

FIG. 4(b) is a perspective view of the front side expanding part 124 of the airbag cushion 108 in FIG. 3(b) viewed obliquely from above. The outer seam margin 144 is formed by vertically overlapping and joining the end portions 138a, 138b on two sides of the main panel 118 in the longitudinal direction in a condition further extending to the front of the vehicle from the acute angle portion 128 of the pair of side panels 120. In this manner, the outer seam margin 144 is formed at the front end of the front side expanding part 124 so as to extend in the vehicle width direction.

FIG. 5 is cross-sectional views of the front side expanding part 124 in FIG. 4(b). FIG. 5(a) is a cross-sectional view along B-B of the front side expanding part 124 in FIG. 4(b). By providing the outer seam margin 144, the front side expanding part 124 is expanded and deployed in a wedge shape without becoming rounded. Therefore, a bottom surface 146 of the front side expanding part 124 is flatter and can make wide surface contact with the upper surface 102a of the instrument panel 102 (see FIG. 2). This allows the airbag cushion 108 to efficiently stand on its own on the instrument panel 102.

FIG. 5(b) is a cross-sectional view along C-C of the front side expanding part 124 in FIG. 4(b). An inner seam margin 148 is formed at a location on the front side expanding part 124 other than the front end. The inner seam margin 148 joins an edge of the main panel 118 and the edges of the side panels 120 in a condition bent to the inner side of the airbag cushion 108. The inner seam margin 148 is formed at all joints between the main panel 118 and the side panels 120 . In other words, the airbag cushion 108 has a seam margin formed on the inner side besides where the outer seam margin 144 is formed at the front end of the front side expanding part 124, such that the seam margin does not come into contact with the occupant 114 (see FIG. 2) or other structures.

As described above, in the front side expanding part 124 formed by the acute angle portion 128 of the side panels 120 and the end portion side of the main panel 118, the outer seam margin 144 of the end portions 138a, 138b of the main panel 118 is formed to extend further forward from the front end, making the front end of the front side expanding part 124 difficult to become rounded. Therefore, the front side expanding part 124 is expanded and deployed in a tapered wedge shape. The front side expanding part 124 having this shape can form the flat bottom surface 146 (see FIG. 5(a)), make surface contact with the instrument panel 102, and maintain a self-supporting posture of the airbag cushion 108, while being suitably inserted between the instrument panel 102 (see FIG. 2) and the windshield 112. This allows the airbag cushion 108 to maintain a self-supporting posture and efficiently restrain the occupant 114.

### Method of Manufacturing Front Passenger Seat Airbag Device

A method of manufacturing the front passenger seat airbag device 100 having the airbag cushion 108 described above will be described below.

The manufacturing method first includes a step of manufacturing the pair of side panels 120 (see FIG. 3(b)). The side panels 120 are manufactured to have the acute angle portion 128 that extends to the front of the vehicle at an acute angle along the upper surface 102a of the instrument panel 102 (see FIG. 2).

In a subsequent step, edges of the pair of side panels 120 are joined together by the strip-shaped main panel 118 (see FIG. 3(c)). At this time, the end portions 138a, 138b on two sides of the main panel 118 in the longitudinal direction are processed so as to extend further to the front of the vehicle from the acute angle portion 128 of the pair of side panels 120 and to overlap vertically.

Next, a step of creating an opening between the end portions 138a, 138b of the main panel 118 and inverting the airbag cushion 108 from the opening is performed prior to forming the outer seam margin 144 (see FIG. 4(b)). With this step, a seam margin for connecting the side panels 120 and the main panel 118 is positioned inside the airbag cushion 108, thereby forming the inner seam margin 148 (see FIG. 5(b)).

After the inner seam margin 148 (see FIG. 5(b)) is formed, a step of vertically joining the end portions 138a, 138b of the main panel 118 by sewing or the like is performed to form the outer seam margin 144 (see FIG. 5(a)). This completes the manufacture of the airbag cushion 108 having the wedge-shaped front side expanding part 124 and capable of maintaining a self-supporting posture.

The airbag cushion 108 manufactured by the manufacturing method described above is also useful for installation of the diffuser 116 (see FIG. 2). Conventionally, an airbag cushion has been inverted using the through hole 140 for an inflator (see FIG. 3(c)) after sewing each panel member. However, in this method, when the diffuser 116 is provided around the through hole 140, work must be performed in which the diffuser 116 must be sewn or the like inside the airbag cushion after the airbag cushion is inverted, thereby causing installation work of the diffuser 116 to be time consuming. On the other hand, with this manufacturing method, the airbag cushion 108 is inverted by opening the front end of the front side expanding part 124 instead of the through hole 140 for the inflator. Therefore, the diffuser 116 can be provided around the through hole 140 prior to the inversion process. In other words, with this manufacturing method, it is possible to easily install the diffuser 116 on the main panel 118 in advance.

Furthermore, with this manufacturing method, the diffuser 116 can also be installed on the main panel 118 in a folded and temporarily sewn state. The temporary sewing is sewing in which the thread breaks or frays when a certain amount of force is applied, thereby eliminating the thread. By folding the diffuser 116 and performing temporary sewing, it is possible to prevent the position of the diffuser 116 from shifting when the airbag cushion 108 is stowed. Furthermore, when gas pressure is applied, the temporary sewing is eliminated, the diffuser 116 is deployed, and a gas rectifying function of the diffuser 116 allows the airbag cushion 108 to smoothly expand and deploy. In providing such a temporarily sewn diffuser 116, the aforementioned manufacturing method of opening the front end of the front side expanding part 124 and inverting the airbag cushion 108 is extremely useful.

### Modified Example

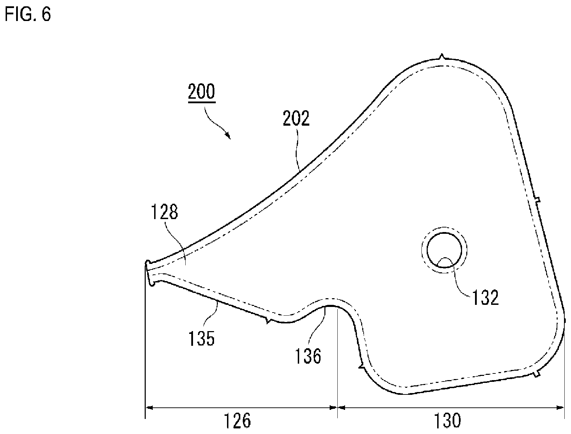

Modified examples of each of the above-described components are described below. FIG. 6 is a modified example of the side panel 120 in FIG. 3(b) (side panel 200). In FIG. 6, the same signs are attached to the same structural elements as those described above, and a description of the aforementioned structural elements is omitted. In the following description, components having the same name as a component already described are assumed to have the same function unless otherwise specified, even if marked with a different sign.

In the side panel 200, an upper edge 202 is curved downward and indented. The upper surface of the airbag cushion 108 (see FIG. 2) bulges to some extent toward the windshield 112 in a rounded shape due to the pressure of the gas when receiving gas. Therefore, if the side panel 200 has the upper edge 202 curved and indented in advance, the airbag cushion 108 can be prevented from being excessively convex toward the windshield 112 by suppressing roundness when expanded and deployed. Therefore, even if the side panel 200 is used, the wedge-shaped front side expanding part 124 can be efficiently formed, and thus the front side expanding part 124 can be smoothly inserted into the space between the windshield 112 and the instrument panel 102.

Preferred examples of the present invention were described above while referring to the attached drawings. However, the embodiments described above are preferred examples of the present invention, and other embodiments can be implemented or performed by various methods. In particular, unless described otherwise in the specification of the present application, the invention is not limited to the shape, size, configurational disposition, and the like of parts illustrated in detail in the attached drawings. Furthermore, expressions and terms used in the specification of the present application are used for providing a description, and the invention is not limited thereto, unless specifically described otherwise.

Therefore, it is obvious that a person with ordinary skill in the art can conceive various changed examples or modified examples within the scope of the claims.

### INDUSTRIAL APPLICABILITY

The present invention can be used in a front passenger seat airbag device having an airbag cushion that expands and deploys between an instrument panel of a vehicle and an occupant on a front passenger seat, and in a method of manufacturing a front passenger seat airbag device.

### DESCRIPTION OF CODES

100... Front passenger seat airbag device, 102... Instrument panel, 102a... Upper surface of instrument panel, 102b... Design surface of instrument panel, 104... Seat, 106... Stowing part, 107... Cover, 108... Airbag cushion, 110... Inflator, 112... Windshield, 114... Occupant, 116... Diffuser, 118... Main panel, 120... Side panel, 122... Occupant restraining part, 124... Front side expanding part, 126... Front side region, 128... Acute angle portion, 130... Restraining region, 132... Vent hole, 134... Upper edge of side panel, 135... Lower edge of side panel, 136... Recessed portion, 138a, 138b... End portion of main panel, 140... Through hole, 142... Bolt hole, 144... Outer seam margin, 146... Bottom surface of front side expanding part, 148... Inner seam margin, 200... Side panel of modified example, 202... Upper edge of side panel

## Claims

1. A front passenger seat airbag device (100), comprising:
an airbag cushion (108) that expands and deploys above an instrument panel (102) of a vehicle and between the instrument panel (102) and a front passenger seat (104) in a condition contacting an upper surface of the instrument panel (102); and
an inflator (110) that supplies gas to the airbag cushion (108), the inflator (110) being secured to an inner side of the instrument panel (102); wherein
the airbag cushion (108) includes:
a pair of side panels (120) that form side portions on two sides of the airbag cushion (108) in a vehicle width direction, and
a strip-shaped main panel (118) connecting edges of the pair of side panels (120) to each other;
the pair of side panels (120) have an acute angle portion (128) that extends along the upper surface (102a) of the instrument panel (102) toward the front of the vehicle at an acute angle; and
the airbag cushion (108) further includes:
an inner seam margin (148) in which an edge of the main panel (118) and edges of the pair of side panels (120) are joined in a condition bent to the inner side of the airbag cushion (108), and
an outer seam margin (144) in which end portions (138a, 138b) on two sides of the main panel (118) in a longitudinal direction are vertically overlapped and joined in a state further extending to the front of the vehicle from the acute angle portion (128) of the pair of side panels (120).

2. The front passenger seat airbag device (100) according to claim 1, wherein the airbag cushion (108) has a front side expanding part (124) that includes the acute angle portions (128) of the pair of side panels (120) and expands so as to protrude to the front of the vehicle in a wedge shape along the upper surface (102a) of the instrument panel (102), and
the outer seam margin (144) is in a state extending from a front end of the front side expanding part (124).

3. The front passenger seat airbag device (100) according to claim 1 or 2, wherein the main panel (118) has a through hole (140) formed at a location contacting the upper surface (102a) of the instrument panel (102) and connected to the inflator (110) in a state in which a portion of the inflator (110) is inserted.

4. The front passenger seat airbag device (100) according to claim 3, wherein the airbag cushion (108) further has a diffuser (116) provided in a periphery of the through hole (140) of the main panel (118) on the inner side of the airbag cushion (108) to cover the inflator (110) and guide gas in a prescribed direction.

5. The front passenger seat airbag device (100) according to any one of claims 1 to 4, wherein upper edges of the pair of side panels (120) extend in a shape approximating a straight line.

6. The front passenger seat airbag device (100) according to any one of claims 1 to 5, wherein the upper edges of the pair of side panels (120) are curved downward and recessed.

7. The front passenger seat airbag device (100) according to any one of claims 1 to 6, wherein the pair of side panels (120) further include:
a front side region (126) containing the acute angle portion (128) and positioned above the instrument panel (102);
a restraining region (130) positioned between the instrument panel (102) and the occupant and extending below the front side region (126); and
a recessed portion (136) formed on a boundary between the front side region (126) and the restraining region (130) of lower edges of the pair of side panels (120) and curved upward and recessed.

8. A method of manufacturing a front passenger seat airbag device (100) according to any one of the preceding claims, the method comprising:
a step of manufacturing a pair of side panels (120) having an acute angle portion (128) that extends along the upper surface (102a) of the instrument panel (102) toward the front of the vehicle at an acute angle;
a step of connecting edges of the pair of side panels (120) together by a strip-shaped main panel to achieve a condition in which end portions (138a, 138b) on two sides of the main panel (118) in a longitudinal direction further extend to the front of the vehicle to vertically overlap;
a step of inverting the airbag cushion (108) through an opening between the end portions (138a, 138b) of the main panel (118); and
a step of joining the end portions (138a, 138b) of the main panel (118).

## Patentansprüche

1. Airbagvorrichtung (100) für einen Beifahrersitz, umfassend:
ein Airbagkissen (108), das sich über einem Armaturenbrett (102) eines Fahrzeugs und zwischen dem Armaturenbrett (102) und einem Beifahrersitz (104) in einem Zustand ausdehnt und entfaltet, in dem es eine obere Oberfläche des Armaturenbretts (102) berührt; und
einen Gasgenerator (110), der das Airbagkissen (108) mit Gas versorgt, wobei der Gasgenerator (110) an einer Innenseite des Armaturenbretts (102) gesichert ist; wobei
das Airbagkissen (108) einschließt:
ein Paar von Seitenbahnen (120), die Seitenabschnitte auf zwei Seiten des Airbagkissens (108) in einer Fahrzeugbreitenrichtung ausbilden und
eine streifenförmige Hauptbahn (118), die Kanten des Paars von Seitenbahnen (120) miteinander verbindet;
wobei das Paar von Seitenbahnen (120) einen spitzwinkligen Abschnitt (128) aufweist, der sich in einem spitzen Winkel entlang der oberen Oberfläche (102a) des Armaturenbretts (102) in Richtung der Front des Fahrzeugs erstreckt; und
das Airbagkissen (108) ferner einschließt:
einen inneren Nahtrand (148), in dem eine Kante der Hauptbahn (118) und Kanten des Paars von Seitenbahnen (120) in einem zu der Innenseite des Airbagkissens (108) gebogenen Zustand verknüpft sind und
einen äußeren Nahtrand (144), in dem Endabschnitte (138a, 138b) auf zwei Seiten der Hauptbahn (118) in einer Längsrichtung vertikal überlappen und in einem Zustand verknüpft sind, der sich weiter zu der Front des Fahrzeugs von dem spitzwinkligen Abschnitt (128) des Paars von Seitenbahnen (120) erstreckt.

2. Airbagvorrichtung (100) für einen Beifahrersitz nach Anspruch 1, wobei das Airbagkissen (108) einen sich an der Frontseite ausdehnenden Teil (124) aufweist, der die spitzwinkligen Abschnitte (128) des Paars von Seitenbahnen (120) einschließt und sich ausdehnt, um zu der Front des Fahrzeugs in einer Keilform entlang der oberen Oberfläche (102a) des Armaturenbretts (102) vorzustehen und
sich der äußere Nahtrand (144) in einem Zustand befindet, der sich von einem Frontende des sich an der Frontseite ausdehnenden Teils (124) erstreckt.

3. Airbagvorrichtung (100) für einen Beifahrersitz nach Anspruch 1 oder 2, wobei die Hauptbahn (118) ein Durchgangsloch (140) aufweist, das an einer Stelle ausgebildet ist, die die obere Oberfläche (102a) des Armaturenbretts (102) berührt, und mit dem Gasgenerator (110) in einem Zustand verbunden ist, in dem ein Abschnitt des Gasgenerators (110) eingesetzt ist.

4. Airbagvorrichtung (100) für einen Beifahrersitz nach Anspruch 3, wobei das Airbagkissen (108) ferner einen Diffusor (116) aufweist, der in einem Umfang des Durchgangslochs (140) der Hauptbahn (118) auf der Innenseite des Airbagkissens (108) bereitgestellt ist, um den Gasgenerator (110) abzudecken und Gas in eine vorgeschriebene Richtung zu leiten.

5. Airbagvorrichtung (100) für einen Beifahrersitz nach einem der Ansprüche 1 bis 4, wobei sich obere Kanten des Paars von Seitenbahnen (120) in einer Form erstrecken, die annähernd einer geraden Linie entspricht.

6. Airbagvorrichtung (100) für einen Beifahrersitz nach einem der Ansprüche 1 bis 5, wobei die oberen Kanten des Paars von Seitenbahnen (120) nach unten gebogen und vertieft sind.

7. Airbagvorrichtung (100) für einen Beifahrersitz nach einem der Ansprüche 1 bis 6, wobei das Paar von Seitenbahnen (120) ferner einschließt:
einen Frontseitenbereich (126), der den spitzwinkligen Abschnitt (128) enthält und über dem Armaturenbrett (102) positioniert ist;
einen Rückhaltebereich (130), der zwischen dem Armaturenbrett (102) und dem Insassen positioniert ist und sich unterhalb des Frontseitenbereichs (126) erstreckt; und
einen vertieften Abschnitt (136), der an einer Grenze zwischen dem Frontseitenbereich (126) und dem Rückhaltebereich (130) von unteren Kanten des Paars von Seitenbahnen (120) ausgebildet und nach oben gekrümmt und vertieft ist.

8. Verfahren zum Herstellen einer Airbagvorrichtung (100) für einen Beifahrersitz nach einem der vorstehenden Ansprüche, das Verfahren umfassend:
einen Schritt zum Herstellen eines Paars von Seitenbahnen (120), die einen spitzwinkligen Abschnitt (128) aufweisen, der sich entlang der oberen Oberfläche (102a) des Armaturenbretts (102) in Richtung der Front des Fahrzeugs in einem spitzen Winkel erstreckt;
einen Schritt zum Verbinden von Kanten des Paars von Seitenbahnen (120) miteinander durch eine streifenförmige Hauptbahn, um einen Zustand zu erreichen, in dem sich Endabschnitte (138a, 138b) auf zwei Seiten der Hauptbahn (118) in einer Längsrichtung weiter zu der Front des Fahrzeugs erstrecken, um sich vertikal zu überlappen;
einen Schritt zum Umstülpen des Airbagkissens (108) durch eine Öffnung zwischen den Endabschnitten (138a, 138b) der Hauptbahn (118); und
einen Schritt zum Verknüpfen der Endabschnitte (138a, 138b) der Hauptbahn (118).

## Revendications

1. Dispositif de sac gonflable de siège passager avant (100), comprenant :
un coussin de sac gonflable (108) qui s'élargit et se déploie au-dessus d'un tableau de bord (102) d'un véhicule et entre le tableau de bord (102) et un siège passager avant (104) dans un état de contact avec une surface supérieure du tableau de bord (102) ; et
un générateur de gaz (110) qui fournit du gaz au coussin de sac gonflable (108), le générateur de gaz (110) étant fixé sur un côté intérieur du tableau de bord (102) ; dans lequel
le coussin de sac gonflable (108) comporte :
une paire de panneaux latéraux (120) qui forment des parties latérales sur deux côtés du coussin de sac gonflable (108) dans le sens de la largeur du véhicule, et
un panneau principal (118) en forme de bande reliant des bords de la paire de panneaux latéraux (120) l'un à l'autre ;
la paire de panneaux latéraux (120) possède une partie à angle aigu (128) qui s'étend le long de la surface supérieure (102a) du tableau de bord (102) vers l'avant du véhicule à un angle aigu ; et
le coussin de sac gonflable (108) comporte en outre :
une marge de couture intérieure (148) dans laquelle un bord du panneau principal (118) et des bords de la paire de panneaux latéraux (120) sont assemblés dans un état plié vers le côté intérieur du coussin de sac gonflable (108), et
une marge de couture extérieure (144) dans laquelle des parties d'extrémité (138a, 138b) sur deux côtés du panneau principal (118) dans une direction longitudinale sont superposées verticalement et assemblées dans un état s'étendant plus loin vers l'avant du véhicule à partir de la partie à angle aigu (128) de la paire de panneaux latéraux (120).

2. Dispositif de sac gonflable de siège passager avant (100) selon la revendication 1, dans lequel le coussin de sac gonflable (108) possède une partie d'extension côté avant (124) qui comporte les parties à angle aigu (128) de la paire de panneaux latéraux (120) et s'étend de manière à faire saillie vers l'avant du véhicule dans une forme de coin le long de la surface supérieure (102a) du tableau de bord (102), et
la marge de couture extérieure (144) est dans un état s'étendant à partir d'une extrémité avant de la partie d'extension côté avant (124).

3. Dispositif de sac gonflable de siège passager avant (100) selon la revendication 1 ou 2, dans lequel le panneau principal (118) possède un trou traversant (140) formé à un endroit en contact avec la surface supérieure (102a) du tableau de bord (102) et relié au générateur de gaz (110) dans un état dans lequel une partie du générateur de gaz (110) est insérée.

4. Dispositif de sac gonflable de siège passager avant (100) selon la revendication 3, dans lequel le coussin de sac gonflable (108) possède en outre un diffuseur (116) prévu dans une périphérie du trou traversant (140) du panneau principal (118) sur le côté intérieur du coussin de sac gonflable (108) pour recouvrir le générateur de gaz (110) et guider le gaz dans une direction prescrite.

5. Dispositif de sac gonflable de siège passager avant (100) selon l'une quelconque des revendications 1 à 4, dans lequel des bords supérieurs de la paire de panneaux latéraux (120) s'étendent dans une forme proche d'une ligne droite.

6. Dispositif de sac gonflable de siège passager avant (100) selon l'une quelconque des revendications 1 à 5, dans lequel les bords supérieurs de la paire de panneaux latéraux (120) sont incurvés vers le bas et en retrait.

7. Dispositif de sac gonflable de siège passager avant (100) selon l'une quelconque des revendications 1 à 6, dans lequel la paire de panneaux latéraux (120) comporte en outre :
une région côté avant (126) contenant la partie à angle aigu (128) et positionnée au-dessus du tableau de bord (102) ;
une région de retenue (130) positionnée entre le tableau de bord (102) et l'occupant et s'étendant sous la région côté avant (126) ; et
une partie en retrait (136) formée sur une limite entre la région côté avant (126) et la région de retenue (130) de bords inférieurs de la paire de panneaux latéraux (120) et incurvée vers le haut et en retrait.

8. Procédé de fabrication d'un dispositif de sac gonflable de siège passager avant (100) selon l'une quelconque des revendications précédentes, le procédé comprenant :
une étape de fabrication d'une paire de panneaux latéraux (120) possédant une partie à angle aigu (128) qui s'étend le long de la surface supérieure (102a) du tableau de bord (102) vers l'avant du véhicule à un angle aigu ;
une étape consistant à relier ensemble des bords de la paire de panneaux latéraux (120) par un panneau principal en forme de bande pour obtenir un état dans lequel des parties d'extrémité (138a, 138b) sur deux côtés du panneau principal (118) dans une direction longitudinale s'étendent plus loin vers l'avant du véhicule pour se chevaucher verticalement ;
une étape d'inversion du coussin de sac gonflable (108) à travers une ouverture entre les parties d'extrémité (138a, 138b) du panneau principal (118) ; et
une étape d'assemblage des parties d'extrémité (138a, 138b) du panneau principal (118).
